# EUROPEAN PATENT APPLICATION

(11) **EP 1 571 353 A2**
(43) Date of publication of application: **07.09.2005**
(21) Application number: 05380006.6
(22) Date of filing: 12.01.2005
(51) Int. Cl.: F16B 5/06, B60R 13/02, F16B 21/09

(54) **Connection part between a panel and a support**

(30) Priority: 26.01.2004 ES 200400152
(71) Applicant: I.T.W. Espana, S.A., 08520 Les Franqueses Del Valles (Barcelona) (ES)
(72) Inventor: Randez Perez, Jesus, 08520 Les Franqueses d. Valles Barcelona (ES); Vantallo Sabater, Josep, 08520 Les Franqueses d. Valles Barcelona (ES)
(74) Representative: Carpintero Lopez, Francisco

(57) **Abstract**

Comprises a body (1) provided with an elongated segment (3) that crosses an orifice made in the support (4), which may be a sector of a vehicle body, on the body (1) locking a recess (8) belonging to a retainer (9) joined to a panel. It incorporates an overinjected part (13) made of a soft and compressible material on the body (1), which is provided with an absorption ring (14) that envelopes a segment (18) of the body (1) and is in contact with a neck (12) of the retainer (9) absorbing the lateral compressions resulting from positional misalignments due to manufacturing errors and expansions of the support (4) and the panel.

## Description

### OBJECT OF THE INVENTION

The present invention mainly applies to the automotive field and relates to a connection part used to attach any panel, such as a vehicle door panel, to a support, such as a sector of a vehicle body.

The object of the invention is that the connection part absorb the dimensional deviations existing between the panel and the support within assembly tolerances, as well as absorbing the slight positional variations produced in the assembly situation due to the unequal expansion of the parts due to the inner and outer vehicle temperatures and the different coefficient of expansion of the materials conforming the panel and the support.

### BACKGROUND OF THE INVENTION

The connection parts normally used to join a panel to the vehicle body are located on the vehicle body ready to receive a carriage or retainer element of the panel that is inserted by sliding until it is coupled.

The different temperatures to which the panel and the vehicle body are subjected and the various materials conforming them result in expansions of these elements that harm the attachment of the panel and the body, even damaging the panel. This situation can also be worsened by the fact that the initial adjustment between parts has been forced because of the dimensional deviations of the coupled elements from their nominal dimensions.

In order to solve this drawback a number of developments are proposed such as those discussed in Invention Patent EP 0 939 234, which describes a connection between a support and a panel that comprises a connection part that locks in the vehicle body and a cartridge associated to the panel provided with a bushing in which the upper overhanging segment of the connection part is coupled. The bushing is centred and connected to the cartridge body by a number of elastically deformable spiral ribs, so that the positional misalignments that may exist between the upper part of the connection part and the retention ring within fabrication tolerances may be absorbed by the elastic deformation of the ribs. Similarly, the ribs will absorb the variations resulting from the expansion of the panel or the vehicle body.

Another possible solution considered in Invention Patent EP 0 937 898 consists in that the connection part incorporates an upper crown with the aforementioned spiral elastic ribs, which will absorb the dimensional variations when coupled to the retainer element of the panel. This solution can also be seen in Invention Patent ES 2 163 221.

On another hand, US Invention Patent 6 336 768 discusses a connection unit between a vehicle body support and a panel, which is provided with a retainer associated to the panel in which a connection part is coupled that is previously attached to the body by anchoring elements on its lower elongated segment and is provided with a number of discs that enter by lateral sliding in corresponding recesses defined in the support, this connection part mainly standing out in that it incorporates a circular elastic gasket that rests on the inner face of the vehicle body to prevent leaks through the orifice made in said body through which passes the elongated lower segment of the connection part.

The use of this elastic gasket is also considered in Invention Patent EP 0 964 170.

### DESCRIPTION OF THE INVENTION

The union part between the panel and the support, such as a vehicle body, proposed by this invention mainly stands out by incorporating a body provided with positional absorption means consisting of a soft and compressible plastic ring that absorbs the relative positional variations that may arise between the panel and the body as a result of manufacturing errors and/or expansion of said elements.

The panel has a retainer provided with at least one recess for its insertion by sliding on the body of the connection part when assembling the panel, while the connection part is previously connected to the vehicle body by an elongated lower segment of the body that crosses an orifice of the vehicle body and is attached to it by the corresponding retention means.

The body is provided next to the top of the elongated body with a disc-shaped base and an intermediate disc-shaped segment and an upper disc-shaped segment. The upper disc-shaped segment enters the aforementioned recess of the retainer, while the immediately lower segment between the disc-shaped upper segment and intermediate segment constitutes the location of the absorption ring.

The retainer recess is limited on the bottom by a plate with a neck that locks by sliding of the panel in the absorption ring, thereby establishing a coupling between the retainer and the connection part in the position of contact between the retainer neck and the absorption ring.

The absorption ring is obtained from a single overinjection operation performed on the body of the connection part, this operation yielding a single overinjected part consisting of an annular base provided with an inner radial extension that finishes at an end where a cylindrical stem rises vertically, from which in turn the aforementioned absorption ring extends internally.

The annular base is conformed on the disc-shaped base described above and constitutes a sealing gasket that prevents leaks through the orifice made in the body to which the connection part is coupled.

The absorption ring therefore envelopes the aforementioned segment of the body and absorbs the movements between the panel and the body, or in other words absorbs the movements originated between the neck of the retainer belonging to the panel and the segment of the body joined to the vehicle body. The absorption capacity of the ring in a radial sense will be approximately +/- 3 mm for a ring and neck diameter of about 9-10 mm.

The ring therefore has a compression capability that allows absorbing the relative lateral displacement between the panel and the vehicle body to absorb the expansion or construction irregularities within specific tolerances.

The stem described above is housed in radial grooves made in the disc-shaped base and in the intermediate disc-shaped segment, and constitutes the point from where the absorption ring and the annular base are overinjected.

### DESCRIPTION OF THE DRAWINGS

To complete the description being made and in order to aid a better understanding of the characteristics of the invention, according to an example of a preferred embodiment of the invention, a set of drawings is accompanied forming an integral part of the description where, for purposes of illustration and in a non-limiting manner the following is shown:

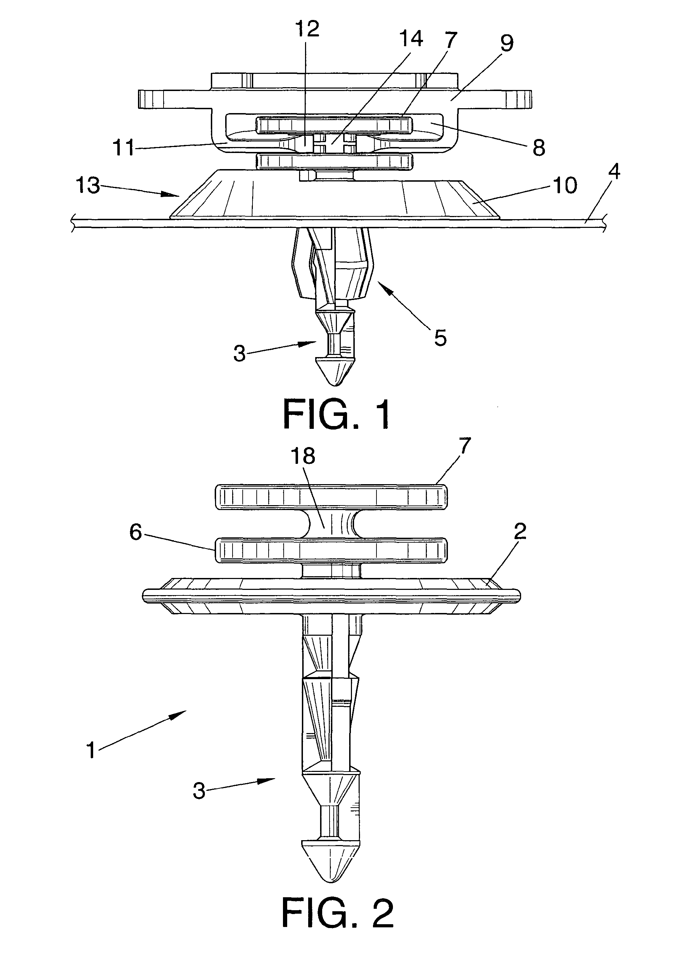

Figure 1.- Shows an elevation view of the connection part object of this invention coupled to the vehicle body, on which the panel retainer is fitted.
Figure 2.- Shows an elevation view of the body of the connection part.

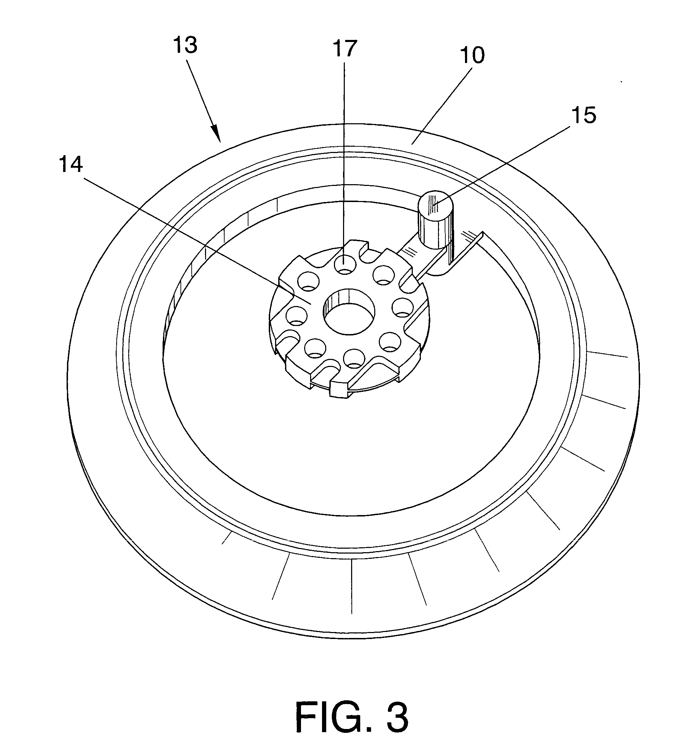

Figure 3.- Shows a perspective view of the part obtained by overinjection.

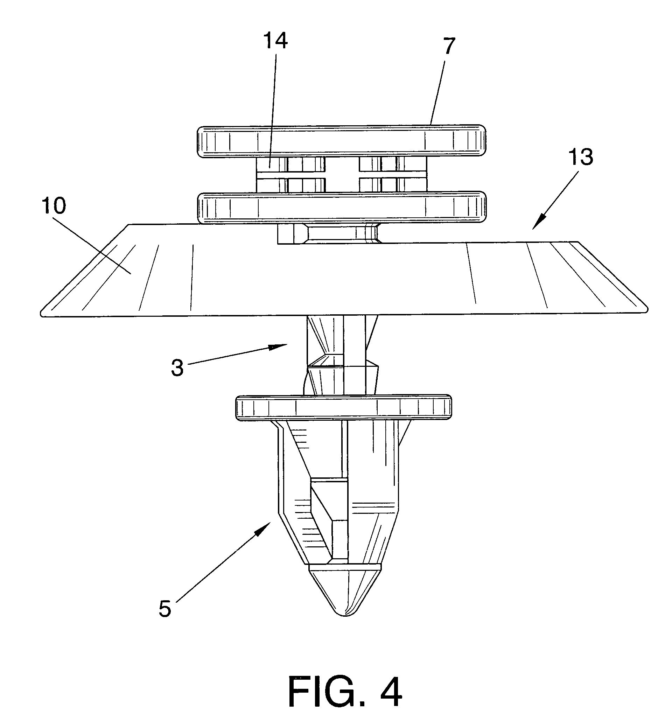

Figure 4.- Shows a cross-section elevation view of the connection part.

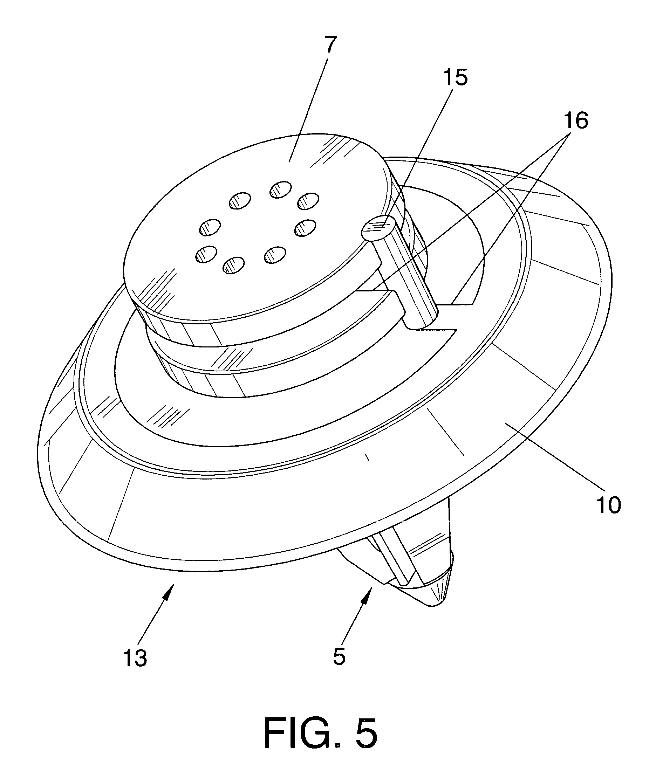

Figure 5.- Shows a perspective view of the connection part in which the overinjected part and the body can be seen.

### PREFERRED EMBODIMENT OF THE INVENTION

The connection part between a panel and a support that is the object of this invention is of the type comprising a body (1) formed by a disc-shaped base (2) from which an elongated segment (3) runs downward and crosses an orifice made in the support (4), which may be a sector of a vehicle body, and is inserted in a retention bushing (5), as well as having on the top of the disc-shaped base (2) an intermediate disc-shaped segment (6) and an upper disc-shaped segment (7) on which locks a recess (8) belonging to a retainer (9) joined to the panel (not shown), this recess (8) being limited on its bottom by a plate (11) provided with a neck (12) for coupling the body (1).

From this basic construction, the connection part object of this invention mainly stands out in that it incorporates an overinjected part (13) made of a soft and compressible material on the body (1) that is provided with an absorption ring (14), enveloping a segment (18) of the body (1) located between the intermediate disc-shaped segment (6) and the upper disc-shaped segment (7), the absorption ring (14) being in contact with the neck (12) and absorbing the lateral compressions caused by positional misalignments due to manufacturing errors and expansions of the support (4) and the panel.

The overinjected part (13) comprises an annular base (10) that constitutes a sealing gasket provided with an inner radial extension that finishes at an end where a cylindrical stem (15) is determined vertically upward, in which the absorption ring (14) extends internally.

In the disc-shaped base (2) and the intermediate disc-shaped segment (6) are provided radial grooves (16) in which the cylindrical stem (15) is housed to constitute the point from where the annular base (10) and the absorption ring (14) are overinjected.

The absorption ring (14) may include a number of orifices (17) distributed on its surface to facilitate its compression.

## Claims

1. Connection part between a panel and a support of the type comprising a body (1) formed by a disc-shaped base (2) from which an elongated segment (3) runs downward and crosses an orifice made in the support (4), which may be a sector of a vehicle body, and is inserted in a retention bushing (5), as well as having on the top of the disc-shaped base (2) an intermediate disc-shaped segment (6) and an upper disc-shaped segment (7) on which locks a recess (8) belonging to a retainer (9) joined to the panel, this recess (8) being limited on its bottom by a plate (11) provided with a neck (12) for coupling the body (1), **characterised in that** it incorporates an overinjected part (13) made of a soft and compressible material on the body (1), which is provided with an absorption ring (14) that envelopes a segment (18) of the body (1) located between the intermediate disc-shaped segment (6) and the upper disc-shaped segment (7), the absorption ring (14) being in contact with the neck (12) and absorbing the lateral compressions caused by positional misalignments due to manufacturing errors and expansions of the support (4) and the panel (10).

2. Connection part between a panel and a support according to claim 1, **characterised in that** the overinjected part (13) comprises an annular base (10) that constitutes a sealing gasket provided with an inner radial extension that finishes at an end where a cylindrical stem (15) rises vertically, inside which the absorption ring (14) extends internally.

3. Connection part between a panel and a support according to claims 1 and 2, **characterised in that** in the disc-shaped base (2) and the intermediate disc-shaped segment (6) are provided radial grooves (16) in which the cylindrical stem (15) is housed to constitute the point from where the annular base (10) and the absorption ring (14) are overinjected.

4. Connection part between a panel and a support according to claims 1, 2 and 3, **characterised in that** the absorption ring (14) is provided with a number of orifices (17) distributed on its surface to facilitate its compression.
